# EUROPÄISCHE PATENTSCHRIFT

(11) **EP 2 198 335 B1**
(45) Veröffentlichungstag und Bekanntmachung des Hinweises auf die Patenterteilung: **06.06.2012**
(21) Anmeldenummer: 08802198.5
(22) Anmeldetag: 15.09.2008
(51) Int. Cl.: G02B 6/44

(54) **VORRICHTUNG ZUR ABFANGUNG VON LICHTWELLENLEITERKABELN**
DEVICE FOR HOLDING FIBEROPTIC CABLES
DISPOSITIF DE RETENUE DE CÂBLES DE GUIDES D'ONDES OPTIQUES

(30) Priorität: 12.10.2007 DE 202007014371 U
(43) Veröffentlichungstag der Anmeldung: 23.06.2010
(73) Patentinhaber: CCS Technology Inc., Wilmington, DE 19803 (US)
(72) Erfinder: SYPLACZ, Roman, 58099 Hagen (DE); FABISCH, Arnold, 44894 Bochum (DE); OSOBA, Markus, 58300 Wetter (DE); MEYER, Thomas, 12557 Berlin (DE); HECKENBERGER, Klaus, 10119 Berlin (DE)
(74) Vertreter: Sturm, Christoph
(86) Internationale Anmeldenummer: PCT/EP2008/007656
(87) Internationale Veröffentlichungsnummer: WO 2009/049732

(56) Entgegenhaltungen:
- DE-U1-202006 006 018
- DE-U1-202006 006 019
- JP-A- 2004 354 884
- US-A- 5 793 921
- US-A1- 2004 156 611
- US-A1- 2004 256 138

## Beschreibung

Die Erfindung betrifft eine Vorrichtung zur Abfangung von Lichtwellenleiterkabeln nach dem Oberbegriff des Anspruchs 1. Des weiteren betrifft die Erfindung eine Kabelmuffe nach dem Oberbegriff des Anspruchs 5.

Beim Aufbau von Lichtwellenleiterkabelnetzen ist es erforderlich, sogenannte Verbindungsstellen bzw. Abzweigstellen für Lichtwellenleiterkabel vorzusehen, wobei an den Verbindungsstellen bzw. Abzweigstellen Spleiße zwischen in den Lichtwellenteiterkabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Lichtwellenleiterkabel über einen Dichtungskörper einer Kabelmuffe in einen Innenraum der Kabelmuffe eingeführt werden.

So ist aus der DE 20 2006 006 019 U1 ein Dichtungskörper einer Kabelmuffe mit mehreren Dichtungskörpersegmenten, nämlich einem mittleren, zylinderartigen Dichtungskörpersegment und mehreren zylindersegmentartigen Dichtungskörpersegmenten bekannt, wobei das mittlere, zylinderartige Dichtungskörpersegment an einer äußeren Mantelfläche über den Umfang derselben verteilt mehrere Ausnehmungen aufweist, wobei in jede der Ausnehmungen des mittleren Dichtungskörpersegments jeweils ein zylindersegmentartiges Dichtungskörpersegment einführbar ist, und wobei zwischen dem mittleren Dichtungskörpersegment und jedem zylindersegmentartigen Dichtungskörpersegment jeweils eine Kabeleinführungsöffnung mit einem im Bereich der Kabeleinführungsöffnung positionierten, gelartigen Dichtungselement zur Aufnahme und individuellen Abdichtung jeweils eines einzigen Kabels ausgebildet ist.

Die über einen Dichtungskörper in den Innenraum einer Kabelmuffe eingeführten Lichtwellenleiterkabel werden insbesondere innerhalb der Kabelmuffe gegenüber einer Zugbeanspruchung sowie gegebenenfalls auch Torsionsbeanspruchung und Biegebeanspruchung abgefangen, wobei hierzu spezielle Abfangvorrichtungen dienen.

So ist aus der DE 20 2006 006 018 U1 eine Vorrichtung zur Abfangung von Lichtwellenleiterkabeln im Bereich eines Dichtungskörpers einer Kabelmuffe, nämlich innerhalb eines von der Kabelmuffe begrenzten Innenraums derselben, mit einem Montageteil und mehreren am Montageteil angreifenden Schieberteilen bekannt, wobei das Montageteil am Dichtungskörper der Kabelmuffe befestigbar ist, wobei jedes Schieberteil der individuellen Abfangung eines einzigen Lichtwellenleiterkabels dient und zur Anpassung desselben an einen Kabeldurchmesser des jeweils abzufangenden Lichtwellenleiterkabels in seiner Position relativ zum Montageteil translatorisch in radialer Richtung des Dichtungskörpers verstellbar ist, und wobei an den Schieberteilen Führungsteile derart angreifen, dass jedes Führungsteil, welches der individuellen Abfangung eines Zentralelements des am entsprechenden Schieberteil abzufangenden Lichtwellenleiterkabels dient, zur mittigen Ausrichtung desselben an das Zentralelement des jeweils abzufangenden Lichtwellenleiterkabels in seiner Position relativ zum Schieberteil translatorisch verstellbar ist.

Mit der aus der DE 20 2006 006 018 U1 bekannten Abfangvorrichtung können z. B. am Dichtungskörper gemäß DE 20 2006 006 019 U1 Lichtwellenleiterkabel individuell und sicher abgefangen werden. Dann jedoch, wenn an einem montierten Dichtungskörper auf ein abgefangenes Lichtwellenleiterkabel zugegriffen werden soll, bereitet die Handhabung des bereits abgefangenen Lichtwellenteiterkabels Schwierigkeiten, wobei insbesondere die Gefahr besteht, dass das Lichtwellenleiterkabel bzw. die im Lichtwellenleiterkabel verlaufenden Lichtwellenleiter einer inakzeptablen Dämpfungserhöhung ausgesetzt sind.

Aus der US-A-5,793 921 ist eine weitere Vorrichtung zur Abfangung von Lichtwellenleiterkabeln in Kabelmuffen mit auf einem Montageteil verschiebbar befestigten Schieberteilen gemäß dem Oberbegriff des Anspruchs 1 bekannt.

Hinsichtlich weiteren Standes der Technik sei auf die JP 2004 354884 A verwiesen.

Der hier vorliegenden Erfindung liegt das Problem zu Grunde, eine neuartige Vorrichtung zur Abfangung von Lichtwellenleiterkabeln sowie eine neuartige Kabelmuffe zu schaffen.

Dieses Problem wird durch eine Vorrichtung gemäß Anspruch 1 gelöst. Die erfindungsgemäße Vorrichtung umfasst mindestens ein am Montageteil befestigbares Aufnahmeteil, welches eine Länge aufweist, dass es in einem am Montageteil befestigten Zustand gegenüber dem Montageteil und dem Dichtungskörper der Kabelmuffe in radialer Richtung vorsteht, sodass ein an einem Schieberteil abgefangenes Lichtwellenleiterkabel zusammen mit dem Schieberteil vom Montageteil entfernbar und an einem am Montageteil gefestigten Aufnahmeteil aufnehmbar ist.

Die erfindungsgemäße Vorrichtung zur Abfangung von Lichtwellenleiterkabeln umfasst mindestens ein Aufnahmeteil, welches eine definierte Aufnahmeposition bzw. Parkposition für ein bereits am Dichtungskörper installiertes sowie an der Abfangvorrichtung abgefangenes Lichtwellenleiterkabel dann bereitstellt, wenn auf das Lichtwellenleiterkabel bzw. den Kabeleinführungsbereich des Dichtungskörpers, über welchen das Lichtwellenleiterkabel geführt ist, zugegriffen werden muss. Das Lichtwellenleiterkabel wird dann zusammen mit dem Schieberteil, an welchem das Lichtwellenleiterkabel befestigt ist, am Aufnahmeteil aufgenommen, wobei das Aufnahmeteil in Umfangsrichtung des Dichtungskörpers gesehen gegenüber der Kabeleinführungsöffnung des Lichtwellenleiterkabels versetzt ist und in Radialrichtung des Dichtungskörpers gegenüber demselben vorsteht. Hierdurch wird eine definierte Aufnahmeposition bzw. Parkposition für ein Lichtwellenleiterkabel geschaffen, welches zur Ausführung von z.B. Wartungsarbeiten an einem bereits montierten Dichtungskörper aus der für dieselbe vorgesehenen Kabeleinführungsöffnung entfernt werden muss. In der vom Aufnahmeteil definierten Parkposition bzw. Aufnahmeposition ist die Gefahr einer Dämpfungserhöhung auf ein Minimum reduziert.

Die erfindungsgemäße Kabelmuffe ist in Anspruch 5 definiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: einen Ausschnitt aus einem aus dem Stand der Technik bekannten Dichtungskörper einer Kabelmuffe zusammen mit einer Vorrichtung zur Abfangung von Lichtwellenleiterkabeln und an der Vorrichtung abgefangenen Lichtwellenleiterkabeln in perspektivischen Ansicht;
- Fig. 2:: die Anordnung der Fig. 1 zusammen mit einem Aufnahmeteil zur Ausbildung einer erfindungsgemäßen Vorrichtung zur Abfangung von Lichtwellenleiterkabeln;
- Fig. 3:: die Anordnung der Fig. 1 mit einem vom Dichtköper entfernten Dichtköpersegment;
- Fig. 4:: das Aufnahmeteil der erfindungsgemäßen Vorrichtung zur Abfangung von Lichtwellenleiterkabeln in perspektivischer Alleindarstellung; und
- Fig. 5:: das Aufnahmeteil der Fig. 4 in einer anderen perspektivischen Alleindarstellung.

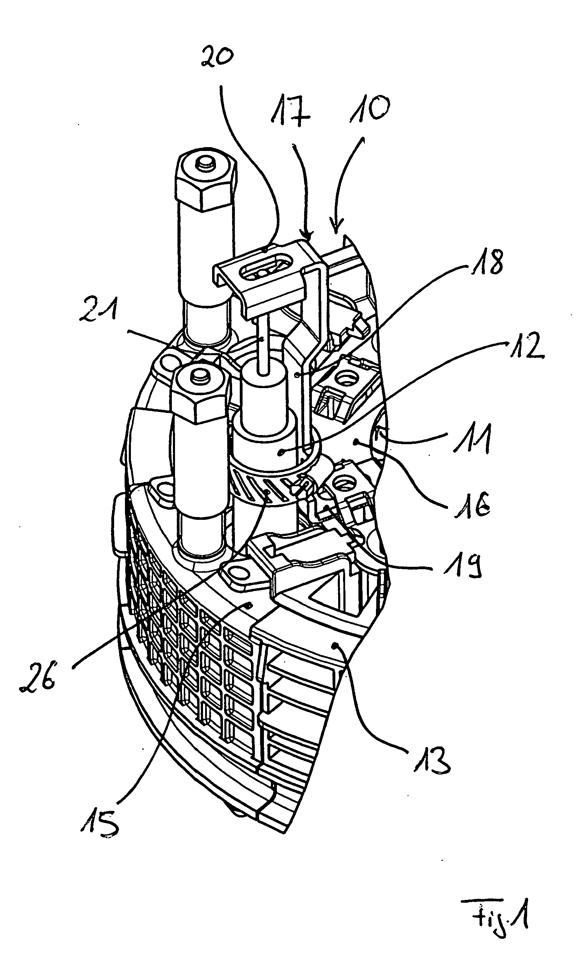

Nachfolgend wird die Erfindung unter Bezugnahme auf Fig. 1 bis 5 in größerem Detail beschrieben.

Fig. 1 zeigt einen Ausschnitt aus einem Dichtungskörper 10 einer Kabelmuffe zusammen mit einer am Dichtungskörper 10 angreifenden Vorrichtung 11 zur Abfangung von Lichtwellenleiterkabeln im Bereich des Dichtungskörpers 10 sowie zusammen mit einem an der Vorrichtung abgefangenen Lichtwellenleiterkabel 12.

Bei dem in Fig. 1 ausschnittsweise dargestellten Dichtungskörper handelt es sich vorzugsweise um den Dichtungskörper gemäß DE 20 2006 006 019 U1.

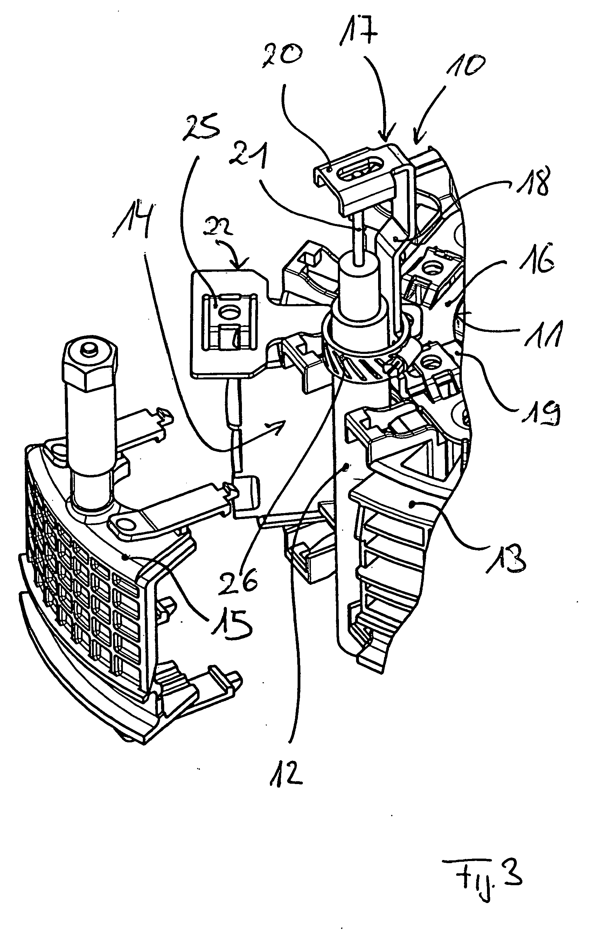

So umfasst der Dichtungskörper 10 ein mittleres, zylinderartiges Dichtungskörpersegment 13, welches an einer äußeren Mantelfläche mehrere Ausnehmungen 14 (siehe Fig. 3) aufweist, wobei in jede der Ausnehmungen 14 des mittleren Dichtungskörpersegments 13 jeweils ein zylindersegmentartiges Dichtungskörpersegment 15 einführbar ist. Zwischen dem mittleren Dichtungskörpersegment 13 und jedem zylindersegmentartigen Dichtungskörpersegment 15 ist jeweils eine Kabeleinführungsöffnung zur Aufnahme jeweils eines einzigen Lichtwellenleiterkabels 12 ausgebildet, wobei zur Abdichtung jedes Lichtwellenleiterkabels 12 in der jeweiligen Kabeleinführungsöffnung gelartige Dichtungselemente angeordnet sind, die unter Abdichtung von in die Kabeleinführungsöffnungen eingeführten Lichtwellenleiterkabeln 12 komprimierbar sind. Hinsichtlich weiterer Details des Dichtungskörpers wird auf die DE 20 2006 006 019 U1 verwiesen, auf deren Offenbarungsgehalt hier explizit Bezug genommen wird.

An der in Fig. 1 sichtbaren Innenfläche des Dichtungskörpers 10 ist die Vorrichtung 11 zur Abfangung von Lichtwellenleiterkabeln im Bereich des Dichtungskörpers 10 montiert, wobei es sich bei der in Fig. 1 dargestellten Vorrichtung zur Abfangung von Lichtwellenleiterkabeln um die aus der DE 20 2006 006 018 U1 bekannte Abfangvorrichtung handelt. So umfasst die Vorrichtung 11 zur Abfangung von Lichtwellenleiterkabeln ein Montageteil 16, über welches die Vorrichtung 11 am Dichtungskörper 10 befestigt ist. Neben dem Montageteil 16 umfasst die Vorrichtung 11 mehrere Schieberteile 17, wobei an jedem Schieberteil 17 jeweils ein Lichtwellenleiterkabel 12, welches in eine Kabeleinführungsöffnung des Dichtungskörpers 10 eingeführt ist, abgefangen werden kann. Jedes Schieberteil 17 weist einen Mittelabschnitt 18 sowie zwei gegenüber dem Mittelabschnitt 18 in unterschiedliche Richtungen abgewinkelte Endabschnitte 19, 20 auf, wobei der Endabschnitt 19 der Befestigung und Führung eines Schieberteils 17 am Montageteil 16 derart dient, dass durch Verlagerung eines Schieberteils 17 gegenüber dem Montageteil 16 in Radialrichtung des Dichtungskörpers 10 das Schieberteil 17 an einen individuellen Durchmesser des abzufangenden Lichtwellenleiterkabels 12 angepasst werden kann.

Der gegenüberliegende, in eine entgegengesetzte Richtung abgewinkelte Endabschnitt 20 dient hingegen der Aufnahme eines nicht-dargestellten Führungsteils zur individuellen Abfangung eines Zentralelements 21 des Lichtwellenleiterkabels 12. Hinsichtlich weiterer Details wird auf die DE 20 2006 006 018 U1 verwiesen, auf deren Offenbarungsgehalt hier explizit Bezug genommen wird.

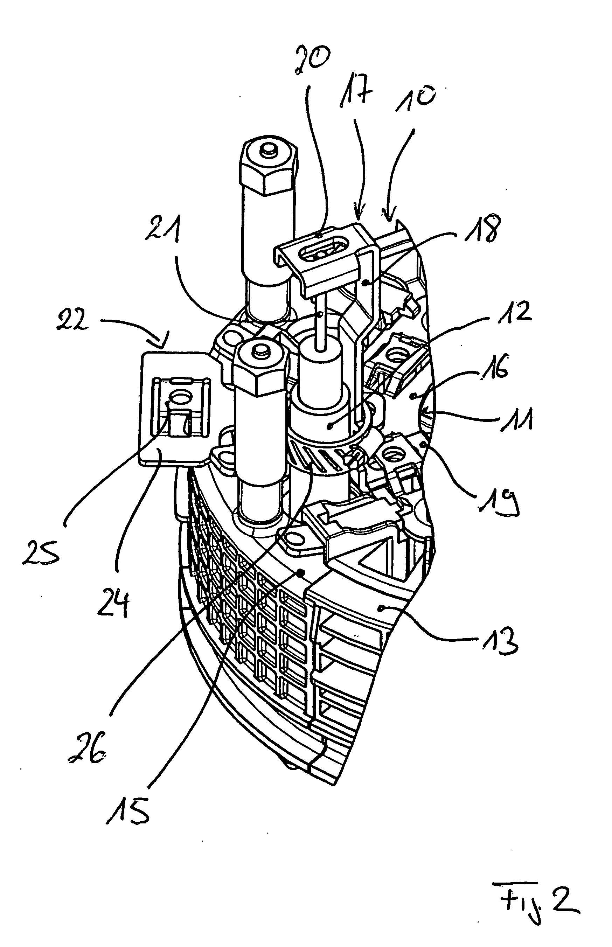

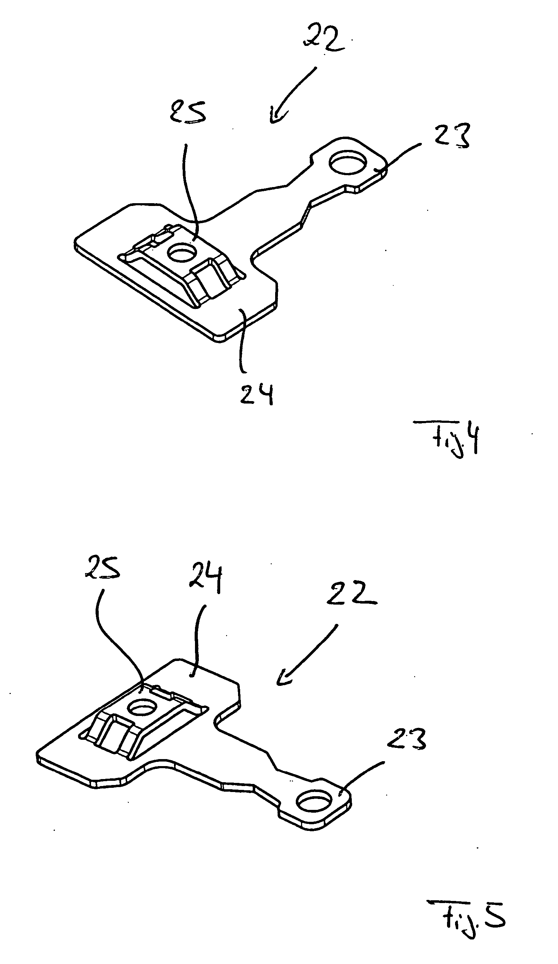

Die erfindungsgemäße Vorrichtung zur Abfangung von Lichtwellenleiterkabeln verfügt zusätzlich zu den Baugruppen, welche bereits von der Abfangvorrichtung gemäß der DE 20 2006 006 018 U1 bekannt sind, weiterhin über mindestens ein am Montageteil 16 befestigbares Aufnahmeteil 22 (siehe Fig. 2, 3). Das Aufnahmeteil 22 ist in Fig. 4, 5 in perspektivischer Alleindarstellung gezeigt. Das oder jedes Aufnahmeteil 22 weist ein erstes Ende 23 auf, über welches dasselbe am Montageteil 16 befestigbar ist, und zwar an einer Umfangsposition des Montageteils 16, die zwischen zwei Ausnehmungen 14 und damit zwei Kabeleinführungsöffnungen des Dichtungskörpers 10 positioniert ist. Ein zweites Ende 24 des oder jedes Aufnahmeteils 22 dient der Aufnahme eines an einem Schieberteil 17 abgefangenen Lichtwellenleiterkabels 12, wobei ein Schieberteil 17 mit dem Endabschnitt 19 an dem zweiten Ende 24 eines Aufnahmeteils 22 derart aufnehmbar ist, dass der Endabschnitt 19 eines Schieberteils 17 in eine U-förmige Ausstellung 25 eines zweiten Endes 24 eines Aufnahmeteils 22 einführbar ist. Das oder jedes Aufnahmeteil 22 verfügt über eine Länge, sodass ein am Montageteil 16 befestigtes Aufnahmeteil 22 in Radialrichtung des Dichtungskörpers 10 gegenüber dem Montageteil 16 der Abfangvorrichtung 11 und dem Dichtungskörper 10 einer Kabelmuffe vorsteht (siehe Fig. 2, 3).

Dann, wenn auf ein Lichtwellenleiterkabel 12 eines bereits montierten Dichtungskörpers 10 zugegriffen werden soll, kann, wie Fig. 3 zeigt, zur Freigabe des in der Ausnehmung 14 positionierten Lichtwellenleiterkabels 12 das entsprechende zylindersegmentartige Dichtungskörpersegment 15 aus der Ausnehmung 14 herausbewegt werden, sodass dann das in der Ausnehmung 14 befindliche Lichtwellenleiterkabel 12 zugänglich ist.

Das Lichtwellenleiterkabel 12 ist dann zusammen mit dem Schieberteil 17, an welchem dasselbe über eine Kabelschelle 26 befestigt ist, aus der Ausnehmung 14 und damit aus der Kabeleinführungsöffnung desselben entfernbar, wobei im Umfangsrichtung gesehen neben der Ausnehmung 14 das Aufnahmeteil 22 radial gegenüber dem Dichtungskörper 10 vorsteht und eine Parkposition bzw. Aufnahmeposition für das an dem Schieberteil 17 befestigte Lichtwellenleiterkabel 12 bereitstellt. Dann, wenn ein Lichtwellenleiterkabel 12 zusammen mit dem Schieberteil 17 aus einer Ausnehmung 14 herausbewegt wird, kann das Schieberteil 17 mit seinem Endabschnitt 19 in der U-förmigen Ausstellung 25 des Aufnahmeteils 22 eingeschoben werden, um so das Lichtwellenleiterkabel 12 zusammen mit dem Schieberteil 17 am Aufnahmeteil 22 aufzunehmen.

Es liegt demnach im Sinne der hier vorliegenden Erfindung, eine Abfangvorrichtung für einen Dichtungskörper einer Kabelmuffe bereitzustellen, der mindestens ein am Montageteil der Abfangvorrichtung befestigbares Aufnahmeteil umfasst, wobei jedes Aufnahmeteil eine definierte Parkposition bzw. Aufnahmeposition für ein aus einer Kabeleinführungsöffnung des Dichtungskörpers herausbewegtes Lichtwellenleiterkabel bereitstellt. Das jeweilige Lichtwellenleiterkabel kann zusammen mit dem Schieberteil der Abfangvorrichtung am entsprechenden Aufnahmeteil aufgenommen werden.

### Bezugszeichenliste

- 10: Dichtungskörper
- 11: Vorrichtung
- 12: Lichtwellenleiterkabel
- 13: mittleres, zylinderartiges Dichtungskörpersegment
- 14: Ausnehmung
- 15: zylindersegmentartiges Dichtungskörpersegment
- 16: Montageteil
- 17: Schieberteil
- 18: Mittelabschnitt
- 19: Endabschnitt
- 20: Endabschnitt
- 21: Zentralelement
- 22: Aufnahmeteil
- 23: erstes Ende
- 24: zweites Ende
- 25: Ausstellung
- 26: Kabelschelle

## Patentansprüche

1. Vorrichtung zur Abfangung von Lichtwellenleiterkabeln im Bereich eines Dichtungskörpers einer Kabelmuffe, nämlich innerhalb eines von der Kabelmuffe begrenzten Innenraums derselben, mit einem Montageteil, wobei das Montageteil am Dichtungskörper der Kabelmuffe befestigbar ist, mit mehreren am Montageteil angreifenden Schieberteilen, wobei jedes Schieberteil der individuellen Abfangung eines Lichtwellenleiterkabels dient und zur Anpassung desselben an einen Kabeldurchmesser des jeweils abzufangenden Lichtwellenleiterkabels in seiner Position relativ zum Montageteil translatorisch verstellbar ist, **gekennzeichnet durch** mindestens ein am Montageteil (16) befestigbares Aufnahmeteil (22), welches eine Länge aufweist, dass es in einem am Montageteil befestigten Zustand gegenüber dem Montageteil (16) und dem Dichtungskörper (10) der Kabelmuffe in radialer Richtung vorsteht, sodass ein an einem Schieberteil (17) abgefangenes Lichtwellenleiterkabel (12) zusammen mit dem Schieberteil (17) vom Montageteil (16) entfernbar und an einem am Montageteil (16) befestigten Aufnahmeteil (22) aufnehmbar ist.

2. Vorrichtung nach Anspruch 1, **dadurch gekennzeichnet, dass** das oder jedes Aufnahmeteil (22) ein erstes Ende (23) aufweist, über welches das jeweilige Aufnahmeteil am Montageteil (16) befestigbar ist.

3. Vorrichtung nach Anspruch 1 oder 2, **dadurch gekennzeichnet, dass** das oder jedes Aufnahmeteil (22) ein zweites Ende (24) aufweist, mit welchem das jeweilige Aufnahmeteil gegenüber dem Montageteil (16) und dem Dichtungskörper (10) der Kabelmuffe in dem am Montageteil befestigten Zustand in radialer Richtung vorsteht, wobei ein Schieberteil (17) und damit ein am Schieberteil abgefangenes Lichtwellenleiterkabel (12) am zweiten Ende (24) aufnehmbar ist.

4. Vorrichtung nach einem der Ansprüche 1 bis 3, **dadurch gekennzeichnet, dass** jedes Schieberteil (17) einen Mittelabschnitt (18) aufweist, der an mindestens einem Enden einen abgewinkelte Endabschnitt aufweist, wobei ein Schieberteil über diesen Endabschnitt (19) entweder am Montageteil (12) oder am zweiten Ende (24) des Aufnahmeteils (22) angreift.

5. Kabelmuffe, mit einem einen Innenraum der Kabelmuffe definierenden Muffengehäuse und mit mindestens einem Dichtungskörper, über den Lichtwellenleiterkabel in einen Innenraum der Kabelmuffe einführbar sind, wobei der Dichtungskörper ein mittleres, zylinderartiges Dichtungskörpersegment und mehrere zylindersegmentartige Dichtungskörpersegmente aufweist, wobei das mittlere, zylinderartige Dichtungskörpersegment an einer äußeren Mantelfläche über den Umfang derselben verteilt mehrere Ausnehmungen aufweist, wobei in jede der Ausnehmungen des mittleren Dichtungskörpersegments jeweils ein zylindersegmentartiges Dichtungskörpersegment einführbar ist, und wobei zwischen dem mittleren Dichtungskörpersegment und jedem zylindersegmentartigen Dichtungskörpersegment jeweils eine Kabeleinführungsöffnung mit einem im Bereich der Kabeleinführungsöffnung positionierten gelartigen Dichtungselement zur Aufnahme und individuellen Abdichtung jeweils mindestens eines Kabels ausgebildet ist, **dadurch gekennzeichnet, dass** am Dichtungskörper (10) eine Vorrichtung (11) zur Abfangung von Lichtwellenleiterkabeln nach einem der Ansprüche 1 bis 4 angreift.

6. Kabelmuffe nach Anspruch 5, **dadurch gekennzeichnet, dass** jedes Aufnahmeteil (22) am Montageteil (16) an einer Umfangsposition befestigbar ist, die zwischen zwei Ausnehmungen (14) und damit zwei Kabeleinführungsöffnurigen des Dichtungskörpers (10) positioniert ist.

## Claims

1. Apparatus for restraining fiberoptic cables in the region of a sealing body of a cable sleeve, namely within an interior thereof which is delimited by the cable sleeve, with a fitting part, the fitting part being capable of being fastened on the sealing body of the cable sleeve, with a plurality of slide parts acting on the fitting part, each slide part being used for individually restraining a fiberoptic cable and being capable of being moved translatorially in terms of its position relative to the fitting part for the purpose of matching said slide part to a cable diameter of the respective fiberoptic cable to be restrained, **characterized by** at least one receiving part (22), which can be fastened on the fitting part (16) and has a length such that it protrudes in the radial direction with respect to the fitting part (16) and the sealing body (10) of the cable sleeve in a state in which it is fastened on the fitting part, with the result that a fiberoptic cable (12) restrained on a slide part (17) can be removed from the fitting part (16) together with the slide part (17) and can be received on a receiving part (22) fastened on the fitting part (16).

2. Apparatus according to Claim 1, **characterized in that** the or each receiving part (22) has a first end (23), via which the respective receiving part can be fastened on the fitting part (16).

3. Apparatus according to Claim 1 or 2, **characterized in that** the or each receiving part (22) has a second end (24), with which the respective receiving part protrudes in the radial direction with respect to the fitting part (16) and the sealing body (10) of the cable sleeve in the state in which it is fastened on the fitting part, it being possible for a slide part (17) and therefore a fiberoptic cable (12) restrained on the slide part to be received at the second end (24).

4. Apparatus according to one of Claims 1 to 3, **characterized in that** each slide part (17) has a central section (18), which has a bent-back end section at at least one end, a slide part acting, via this end section (19), either on the fitting part (16) or on the second end (24) of the receiving part (22).

5. Cable sleeve, with a sleeve housing defining an interior of the cable sleeve and with at least one sealing body, via which fiberoptic cables can be inserted into an interior of the cable sleeve, the sealing body having a central, cylindrical sealing body segment and a plurality of sealing body segments in the form of cylinder segments, the central, cylindrical sealing body segment having a plurality of cutouts in an outer lateral surface, distributed over the circumference thereof, wherein in each case one sealing body segment in the form of a cylinder segment can be inserted into each of the cutouts in the central sealing body segment, and wherein in each case one cable insertion opening with a gel-like sealing element, positioned in the region of the cable insertion opening, for receiving and individually sealing in each case at least one cable is formed between the central sealing body segment and each sealing body segment in the form of a cylinder segment, **characterized in that** an apparatus (11) for restraining fiberoptic cables according to one of Claims 1 to 4 acts on the sealing body (10).

6. Cable sleeve according to Claim 5, **characterized in that** each receiving part (22) can be fastened on the fitting part (16) in a circumferential position, which is positioned between two cutouts (14) and therefore two cable insertion openings of the sealing body (10).

## Revendications

1. Dispositif de reprise de câbles de conducteurs d'ondes lumineuses au niveau du corps d'étanchéité d'un manchon de câble, c'est-à-dire à l'intérieur d'un espace intérieur délimité par le manchon de câble, le dispositif étant doté
d'une partie de montage, la partie de montage pouvant être fixée sur le corps d'étanchéité du manchon de câble,
de plusieurs parties coulissantes qui engagent la partie de montage,
chaque partie coulissante servant à reprendre séparément un câble de conducteurs d'ondes lumineuses et sa position par rapport à la partie de montage pouvant être déplacée par translation pour l'adapter au diamètre du câble respectif de conducteurs d'ondes lumineuses à reprendre,
le dispositif étant **caractérisé par**
au moins une partie de réception (22) qui peut être fixée sur la partie de montage (16) et dont la longueur est telle qu'en position fixée sur la partie de montage, elle déborde dans la direction radiale de la partie de montage (16) du corps d'étanchéité (10) du manchon de câble de telle sorte qu'un câble (12) de conducteurs d'ondes lumineuses repris sur une partie coulissante (17) peut être enlevé de la partie de montage (16) en même temps que la partie coulissante (17) et peut être reçu sur une partie de réception (22) fixée sur la partie de montage (16).

2. Dispositif selon la revendication 1, **caractérisé en ce que** la ou chaque partie de réception (22) présentent une première extrémité (23) par laquelle la partie de réception concernée peut être fixée sur la partie de montage (16).

3. Dispositif selon les revendications 1 ou 2, **caractérisé en ce que** la ou chaque partie de réception (22) présentent une deuxième extrémité (24) par laquelle, lorsqu'elle est fixée en position sur la partie de montage, la partie de réception concernée déborde dans la direction radiale par rapport à la partie de montage (16) et au corps d'étanchéité (10) du manchon de câble, une partie coulissante (17) et avec elle un câble (12) de conducteurs d'ondes lumineuses repris sur la partie coulissante pouvant alors être reçus sur la deuxième extrémité (24).

4. Dispositif selon l'une des revendications 1 à 3, **caractérisé en ce que** chaque partie coulissante (17) présente une partie médiane (18) dotée en au moins une extrémité d'un tronçon terminal coudé, une partie coulissante engageant par ce tronçon terminal (19) soit la partie de montage (16) soit la deuxième extrémité (24) de la partie de réception (22).

5. Manchon de câble présentant un boîtier de manchon définissant un espace intérieur du manchon de câble et au moins un corps d'étanchéité par lequel des câbles de conducteurs d'ondes lumineuses peuvent être insérés dans un espace intérieur du manchon de câble,
le corps d'étanchéité présentant un segment cylindrique médian de corps d'étanchéité et plusieurs segments cylindriques de corps d'étanchéité,
le segment cylindrique médian du corps d'étanchéité présentant plusieurs découpes réparties à la périphérie sur sa surface d'enveloppe extérieure,
un segment cylindrique de corps d'étanchéité pouvant être inséré dans chacune des découpes du segment médian de corps d'étanchéité, une ouverture d'insertion de câble dotée d'un élément d'étanchéité de type en gel placé au niveau de l'ouverture d'insertion de câble et servant à assurer séparément l'étanchéité d'au moins un câble étant formée entre le segment médian du corps d'étanchéité et chaque segment cylindrique du corps d'étanchéité,
**caractérisé en ce que**
un dispositif (11) de reprise de câbles de conducteurs d'ondes lumineuses selon l'une des revendications 1 à 4 engage le corps d'étanchéité (10).

6. Manchon de câble selon la revendication 5, **caractérisé en ce que** chaque partie de réception (22) peut être fixée sur la partie de montage (16) en une position périphérique disposée entre deux découpes (14) et donc entre deux ouvertures d'insertion de câble du corps d'étanchéité (10).
